# EUROPÄISCHE PATENTSCHRIFT

(11) **EP 0 870 428 B1**
(45) Veröffentlichungstag und Bekanntmachung des Hinweises auf die Patenterteilung: **26.06.2002**
(21) Anmeldenummer: 98102718.8
(22) Anmeldetag: 17.02.1998
(51) Int. Cl.: A01K 1/01

(54) **Stall-Entmistungsanlage**
Manure removal system
Dispositif évacuateur de fumier

(30) Priorität: 17.02.1997 DE 19706073
(43) Veröffentlichungstag der Anmeldung: 14.10.1998
(73) Patentinhaber: HARTMANN, Hans Peter, D-92268 Etzelwang (DE)
(72) Erfinder: HARTMANN, Hans Peter, D-92268 Etzelwang (DE)
(74) Vertreter: Wächtershäuser, Günter, Prof. Dr.

(56) Entgegenhaltungen:
- DE-A- 2 018 340
- DE-A- 2 941 361
- DE-C- 19 706 073
- FR-A- 2 269 004
- AKADEMISCHEN VEREIN HÜTTE: "Des Ingenieurs Taschenbuch, Maschinenbau Teil A" 1954 , WILHELM ERNST & SOHN , BERLIN XP002086935 * Seite 217-219 *

## Beschreibung

Die Erfindung betrifft eine Stall-Entmistungsanlage mit mindestens einem in Längsrichtung einer Aufstallung durch ein Seil hin- und herbewegbaren Mistschieber, wobei das Seil als ein über Umlenkrollen umgelenktes Endlosseil ausgeführt ist, das durch einen am Seil angreifenden Seiltrieb hin- und herbewegbar ist. Eine solche Anlage ist bekannt aus der DE-PS 29 41 361.

Bei der bekannten Anlage umfaßt der Seiltrieb eine Antriebsrolle mit mehreren Seilrillen und eine dazu achsparallele Umlenkrolle mit mehreren Seilrillen. Das Seil ist in mehreren Schlaufen in die Seilrillen eingelegt und wird durch belastbare Führungsrollen an der Einlauf- bzw. Auslaufstelle in die Rillen gepreßt, um ein Herausspringen des Seils zu verhindern.

Das Seil einer Entmistungsanlage kommt ständig mit aggressivem und korrosiv wirkenden Stallmist, Harn oder Gülle in Berührung. Dies gilt insbesondere, wenn das Seil in vertieften Längsrinnen der Aufstallung verläuft, in denen sich gewöhnlich Gülle ansammelt. Hierdurch besteht die Gefahr einer Spannungsriß-Korrosion unter den hohen Zugspannungen des Seils während des Betriebs. Es werden daher korrosionsfeste Seile aus Nirosta-Stahl oder mit Kunststoff ummantelte Stahlseile verwendet.

Diese aus Korrosionsschutzgründen erforderlichen Seile erleiden nun aber erhebliche Beschädigungen bei dem bekannten Seiltrieb mit Seilrollen. Dies beruht darauf, daß einerseits die Rillen der Seilrollen in senkrecht zu den Rollenachsen stehenden Ebenen verlaufen, während sich die von einer zur anderen Rolle erstreckenden Seilabschnitte schräg zu diesen Ebenen erstrecken. Es kommt daher zu erheblichen Zwängungen und Deformationen an den Rilleneinlaufstellen. Die aus Korrisionsgründen erforderlichen Seiltypen sind diesen hohen Beanspruchungen nicht gewachsen. Ihre Gebrauchsdauer ist erheblich eingeschränkt. Man hat daher verschiedene Wege beschritten, um auf Endloszugseile zu verzichten oder die Zugseile gänzlich durch andere Kraftübertragungen, z. B. Kolbenstangen, zu ersetzen.

Aus der DE-A-2 018 340 ist eine Stallentmistungsanlage bekannt, die einen in Längsrichtung eines Stalls durch ein Seil hin- und herbewegbaren Mistschieber umfasst, wobei das Seil als ein über Umlenkrollen umgelenktes Endlosseil ausgeführt ist, das durch einen am Seil angreifenden Elektromotor hin- und herbewegbar ist.

Es ist Aufgabe der Erfindung, eine Stall-Entmistungsanlage mit einem Endloszugseil und einem Seiltrieb zu schaffen, bei der einerseits ein korrisionsfestes Seil verwendet wird und andererseits eine Beschädigung desselben im Seiltrieb vermieden wird.

Diese Aufgabe wird durch die Stall-Entmistungsanlage des Anspruchs 1 gelöst. Vorteilhafte Weiterbildungen finden sich in den Unteransprüchen.

Im folgenden wird die Erfindung anhand von Zeichnungen näher erläutert. Es zeigen
- Fig. 1: eine schematische Draufsicht einer Aufstallung mit der erfindungsgemäßen Stall-Entmistungsanlage;
- Fig. 2: eine Seitenansicht der Stirnseite der Stall-Entmistungsanlage gemäß Fig. 1 und einen Seiltrieb;

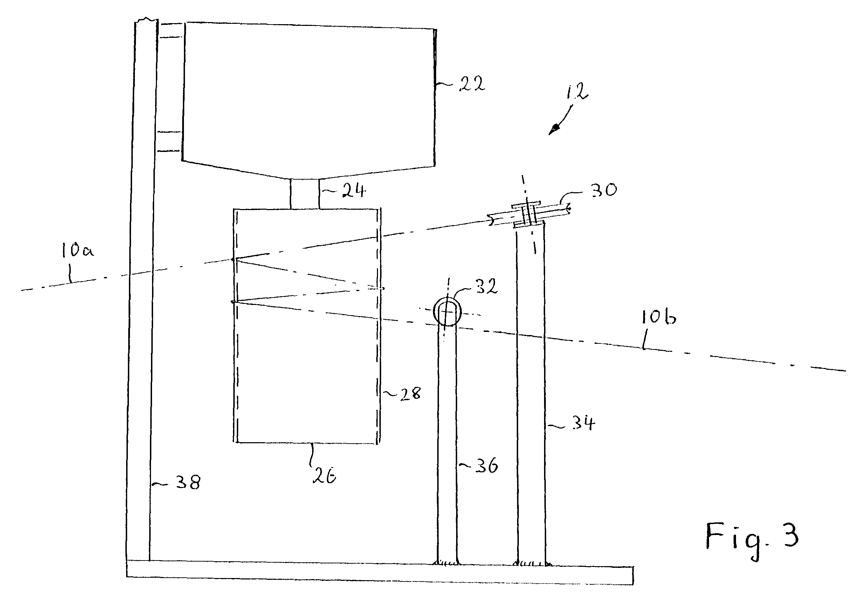

- Fig. 3: eine vergrößerte Seitenansicht des Seiltriebs gemäß Fig. 2; und

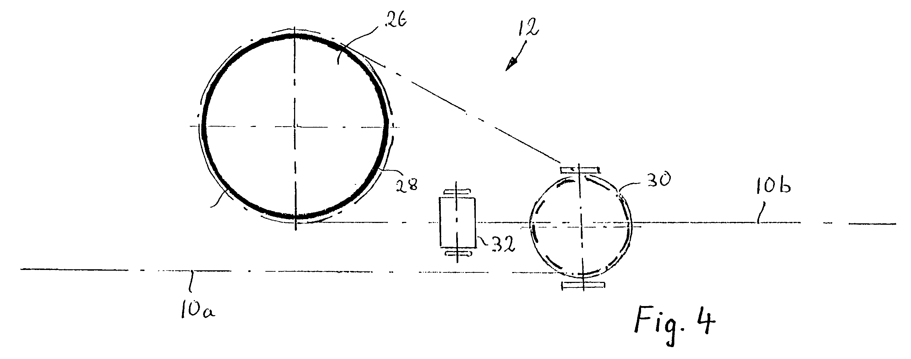

- Fig. 4: eine Draufsicht des Seiltriebs gemäß Fig. 3.

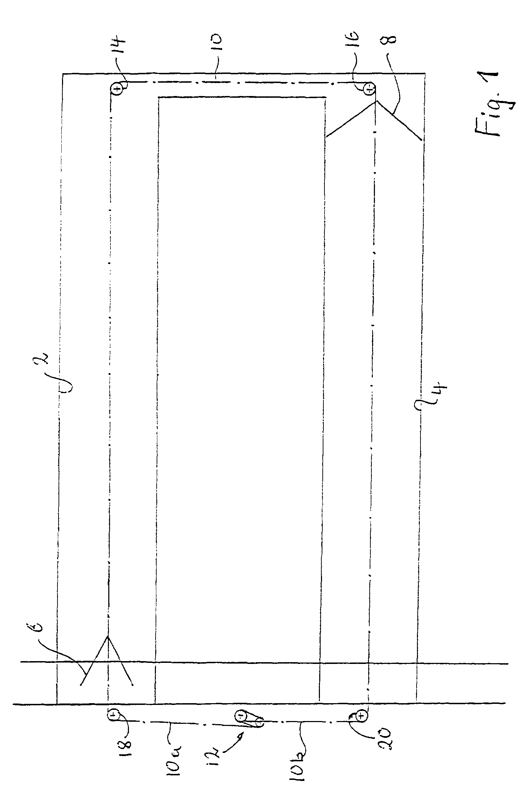

Fig. 1 zeigt eine Draufsicht einer Aufstallung mit zwei parallelen Kotrinnen 2, 4 und zwei Faltschiebern 6, 8. Diese sind an einem mit strichpunktierten Linien dargestellten Seil 10 befestigt, welches als Endlos-Seilschleife ausgebildet ist. Stirnseitig ist ein allgemein mit 12 bezeichneter Seiltrieb vorgesehen.

In der dargestellten Situation bewegt sich das Seil im Uhrzeigersinn. Der Faltschieber 8 befindet sich im Mistschiebe-Zustand. Der Faltschieber 6 wird zurückbewegt.

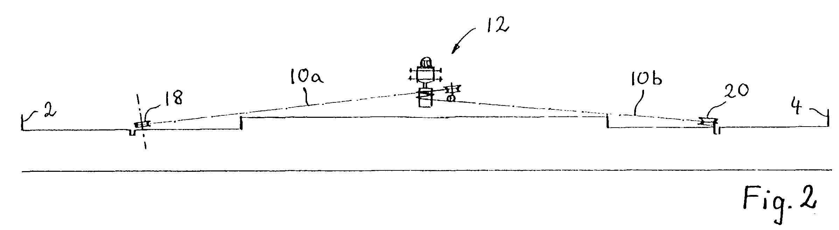

Vier Umlenkrollen 14 bis 20 dienen der Seilumlenkung. Die Drehachsen der Umlenkrollen 14, 16 verlaufen senkrecht zum Stallboden. Gemäß Fig. 2 können die Umlenkrollen 18, 20 leicht geneigt sein. Von diesen erstrecken sich die beiden Seiltrume 10a, 10b mit einem Neigungswinkel zu dem vorzugsweise etwas erhöht angeordneten Seiltrieb 12. Dieser umfaßt einen Antriebsmotor 22, der über eine Welle 24 mit einer Antriebstrommel 26 verbunden ist. Letztere weist einen Gummibelag 28 zur Vermeidung eines Seilschlupfes auf.

Das linke Seiltrum 10a erstreckt sich von der Umlenkrolle 18 zu einer drehbaren Zuführrolle 30. Diese weist den gleichen Neigungswinkel auf wie die Umlenkrolle 18 und das Seiltrum 10a. Durch die Zuführrolle 30 wird das Seil umgelenkt und erstreckt sich zur Antriebstrommel 26. Diese wird in mindestens einer Windung, vorzugsweise in 2 oder mehreren Windungen, von dem Seil helixförmig umschlungen. Der Neigungswinkel der Seilhelix entspricht dabei den Neigungswinkeln des Seiltrumes 10a, der Umlenkrolle 18 und der Zuführrolle 30. Das rechte Seiltrum 10b erstreckt sich von der Antriebstrommel 26 zur Umlenkrolle 20. Eine Bockrolle 32 fixiert dabei den Neigungswinkel des sich von der Antriebstrommel 26 zur Bockrolle 32 erstreckenden Abschnitts des Seiltrums 10b und bringt den Neigungswinkel des sich von der Bockrolle 32 zur Umlenkrolle 20 erstreckenden Abschnitts des Seiltrums 10b in Übereinstimmung zum Neigungswinkel der Umlenkrolle 20. Eine ähnliche Bockrolle kann auch für das Seiltrum 10a vorgesehen sein. Dadurch kann erreicht werden, daß die beiden Umlenkrollen 18, 20 vertikale Achsen haben. Die Zuführrolle 30 kann in ihrem Abstand von der Antriebstrommel variabel sein. Dabei kann eine Spannvorrichtung vorgesehen sein, z. B. eine nicht gezeigte Zugfeder oder Druckfeder oder es kann eine verschwenkbare Motoraufhängung vorgesehen sein. Dadurch wird erreicht, daß das Seil allseitig unter Zugspannung gehalten wird. Die Zuführrolle 30 und die Bockrolle 32 können auf Pfosten 34 bzw. 36 gelagert sein, und der Antriebsmotor 22 ist an einem Ständer 38 befestigt.

Im Betriebszustand gemäß Fig. 2 bewegt sich das Seil im Uhrzeigersinn. Der Faltschieber 8 schiebt den Mist gemäß Fig. 2 nach links. Dadurch gelangt der Seilabschnitt zwischen den Faltschieber 8 und die Antriebstrommel 26 unter eine hohe Zugspannung. Die Zugspannung des schlafferen Seilabschnitts, der sich von der Antriebstrommel 26 über die Zuführrolle 30 und die Umlenkrollen 18, 14, 16 zum Faltschieber 8 erstreckt, wird durch die Federvorspannung zwischen der Antriebstrommel 26 und der Zuführrolle 30 bestimmt. Das Seil ist in allen seinen Abschnitten lediglich auf Zugspannung beansprucht. Durch die Anpassung der Neigungswinkel der Umlenkrollen 18, 20 und der Führungsrolle 30 und der Positionierung der Bockrolle 32 kommt es an keiner Stelle zu Zwängungen zwischen dem Seil und den Rillen der Rollen 14 bis 20 und 30.

Auf der Trommel kann sich bei gegebener Orientierung und Positionierung der Rollen 18, 20, 30, 32 die Seilhelix selbsttätig in einen freien Gleichgewichtszustand bringen, da Verschiebungen der Seilwindungen der Seilhelix in Axialrichtung nicht behindert sind. Hierdurch wird die mechanische Beanspruchung des Seils auf ein Minimum gebracht. Man erreicht dadurch lange Seilnutzungszeiten, obwohl ein gegen die korrosive Wirkung der Gülle beständiges Seilmaterial verwendet wird, z.B. ein Nirosta-Seil oder ein Stahlseil mit einer Kunststoff-Ummantelung.

## Patentansprüche

1. Stall-Entmistungsanlage mit mindestens einem in Längsrichtung einer Aufstallung durch ein Seil (10) hin- und herbewegbaren Mistschieber (6, 8), wobei das Seil (10) als ein über Umlenkrollen (14-20) umgelenktes Endlosseil ausgeführt ist, das durch einen am Seil (10) angreifenden Seiltrieb (12) hin- und herbewegbar ist, und wobei sich das Seil (10) von einer Zuführrolle (30) zu der Antriebstrommel (26) erstreckt, **dadurch**
**gekennzeichnet, dass**
(a) das Seil (10) in mindestens einer Schlaufe schlupfsicher um eine motorgetriebene Antriebstrommel (26) gewunden ist und
(b) die Zuführrolle (30) in ihrem Abstand von der Antriebstrommel (26) variierbar ist und eine Spannvorrichtung vorgesehen ist, um das Seil allseitig unter Zugspannung zu halten.

2. Stall-Entmistungsanlage nach Anspruch 1, **dadurch gekennzeichnet, dass** sich das Seil (10) um die Umlenkrollen (14-20), die Antriebstrommel (26) und die Zuführrolle (30) in der einen Bewegungsrichtung des Mistschiebers (6, 8) im Uhrzeigersinn und in der anderen Bewegungsrichtung des Mistschiebers (6, 8) gegen den Uhrzeigersinn bewegt.

3. Stall-Entmistungsanlage nach Anspruch 1 oder 2, **dadurch gekennzeichnet, dass** die Antriebstrommel (26) eine zum Stallboden im Wesentlichen vertikale Achse (5) aufweist.

4. Stall-Entmistungsanlage nach einem der Ansprüche 1 bis 3, **dadurch gekennzeichnet, dass** die Antriebstrommel (26) an einer Stall-Stirnseite zwischen zwei Umlenkrollen (18,20) angeordnet ist.

5. Stall-Entmistungsanlage nach Anspruch 4, **dadurch gekennzeichnet, dass** die beiden Umlenkrollen (18, 20) leicht gegen die Vertikale geneigte Achsen aufweisen.

6. Stall-Entmistungsanlage nach einem der Ansprüche 1 bis 5, **dadurch gekennzeichnet, dass** die Zuführrolle (30) eine leicht gegen die Vertikale geneigte Achse aufweist.

7. Stall-Entmistungsanlage nach einem der Ansprüche 1 bis 6, **dadurch gekennzeichnet, dass** eines der Seiltrume (10a) über die Position der Antriebstrommel (26) hinaus zu der Zuführrolle 30 mit geneigter Achse und von dieser zurück auf die Antriebstrommel geführt ist.

8. Stall-Entmistungsanlage nach einem der Ansprüche 1 bis 7, **gekennzeichnet durch** eine Bockrolle (32) zur Festlegung des Seil-Antriebstrommel-Übergangs des anderen Seiltrums (10b).

9. Stall-Entmistungsanlage nach einem der Ansprüche 1 bis 8, **dadurch gekennzeichnet, dass** die Spannvorrichtung als Zug- oder Druckfeder ausgebildet ist.

10. Stall-Entmistungsanlage nach einem der Ansprüche 1 bis 9, **dadurch gekennzeichnet, dass** die Oberfläche der Antriebstrommel (26) zur Erhöhung der Schlupfsicherheit mit Gummi beschichtet ist.

11. Stall-Entmistungsanlage nach einem der Ansprüche 1 bis 10, **dadurch gekennzeichnet, dass** das Seil (10) aus einem gegen den korrosiven Angriff von Gülle beständigen Material besteht.

12. Stall-Entmistungsanlage nach einem der Ansprüche 1 bis 11, **dadurch gekennzeichnet, dass** das Seil (10) mit einem gegen den korrosiven Angriff von Gülle beständigen Material beschichtet ist.

## Claims

1. Manure-removal installation having at least one manure pusher (6, 8) which can be moved back and forth by a cable (10) in the longitudinal direction of a barn, the cable (10) being configured as an endless cable which is deflected over deflecting rollers (14-20) and can be moved back and forth by a cable drive (12) acting on the cable (10), and the cable (10) extending from a feed roller (30) to the drive drum (26), **characterized in that**
a) the cable (10) is wound in at least one loop, in a slip-resistant manner, around a motor-driven drive drum (26), and
b) the spacing of the feed roller (30) from the drive drum (26) can be varied, and a bracing arrangement is provided in order to keep the cable tensioned throughout.

2. Manure-removal installation according to Claim 1, **characterized in that** the cable (10) moves around the deflecting rollers (14-20), the drive drum (26) and the feed roller (30) in the clockwise direction in one movement direction of the manure pusher (6, 8) and in the anticlockwise direction in the other movement direction of the manure pusher (6, 8).

3. Manure-removal installation according to Claim 1 or 2, **characterized in that** the drive drum (26) has an axis (5) which is essentially vertical in relation to the floor of the barn.

4. Manure-removal installation according to one of Claims 1 to 3, **characterized in that** the drive drum (26) is arranged on one end side of the barn, between two deflecting rollers (18, 20).

5. Manure-removal installation according to Claim 4, **characterized in that** the two deflecting rollers (18, 20) have axes which are inclined slightly in relation to the vertical.

6. Manure-removal installation according to one of Claims 1 to 5, **characterized in that** the feed roller (30) has an axis which is inclined slightly in relation to the vertical.

7. Manure-removal installation according to one of Claims 1 to 6, **characterized in that** one of the cable strands (10a) is guided beyond the position of the drive drum (26) to the feed roller (30) with inclined axis and, from the latter, back to the drive drum.

8. Manure-removal installation according to one of Claims 1 to 7, **characterized by** a fixed roller (32) for defining the cable/drive drum transfer of the other cable strand (10b).

9. Manure-removal installation according to one of Claims 1 to 8, **characterized in that** the bracing arrangement is designed as a tension or compression spring.

10. Manure-removal installation according to one of Claims 1 to 9, **characterized in that** the surface of the drive drum (26) is coated with rubber in order to increase the slip resistance.

11. Manure-removal installation according to one of Claims 1 to 10, **characterized in that** the cable (10) consists of a material which is resistant to the corrosive effect of liquid manure.

12. Manure-removal installation according to one of Claims 1 to 11, **characterized in that** the cable (10) is coated with a material which is resistant to the corrosive effect of liquid manure.

## Revendications

1. Installation pour évacuer le fumier d'une étable, comportant au moins un élément coulissant pour fumier (6, 8) apte à décrire un mouvement de va-et-vient grâce à un câble (10) dans le sens longitudinal d'un bâtiment destiné à loger du bétail, le câble (10) étant conçu comme un câble sans fin qui passe sur des poulies de renvoi (14-20) et qui est apte à décrire un mouvement de va-et-vient grâce à une commande de câble (12) agissant sur lui, et le câble (10) s'étendant d'une poulie d'amenée (30) au tambour d'entraînement (26),
**caractérisée en ce que**
(a) le câble (10) est enroulé sans patinage, en au moins une boucle, autour d'un tambour d'entraînement (26) commandé par un moteur, et
(b) l'écartement entre la poulie d'amenée (30) et le tambour d'entraînement (26) est variable et un dispositif de serrage est prévu pour maintenir le câble sous tension de traction de tous les côtés.

2. Installation pour évacuer le fumier d'une étable selon la revendication 1, **caractérisée en ce que** le câble (10) passe sur les poulies de renvoi (14-20), le tambour d'entrainement (26) et la poulie d'amenée (30) dans le sens des aiguilles d'une montre, dans un sens de déplacement de l'élément coulissant pour fumier (6, 8), et dans le sens inverse des aiguilles d'une montre, dans l'autre sens de déplacement dudit élément coulissant (6, 8).

3. Installation pour évacuer le fumier d'une étable selon la revendication 1 ou 2, **caractérisée en ce que** le tambour d'entraînement (26) a un axe (5) globalement vertical par rapport au sol de l'étable.

4. Installation pour évacuer le fumier d'une étable selon l'une des revendications 1 à 3, **caractérisée en ce que** le tambour d'entraînement (26) est disposé entre deux poulies de renvoi (18, 20) sur un côté frontal de l'étable.

5. Installation pour évacuer le fumier d'une étable selon la revendication 4, **caractérisée en ce que** les deux poulies de renvoi (18, 20) ont des axes légèrement inclinés par rapport à la verticale.

6. Installation pour évacuer le fumier d'une étable selon l'une des revendications 1 à 5, **caractérisée en ce que** la poulie d'amenée (30) a un axe légèrement incliné par rapport à la verticale.

7. Installation pour évacuer le fumier d'une étable selon l'une des revendications 1 à 6, caractérisée en ce l'un des brins de câble (10a) est amené au-delà de la position du tambour d'entraînement (26) jusqu'à la poulie d'amenée (30) à axe incliné, et est ramené à partir de celui-ci jusqu'au tambour d'entraînement.

8. Installation pour évacuer le fumier d'une étable selon l'une des revendications 1 à 7, **caractérisée par** une poulie de support (32) pour fixer la transition câble-tambour d'entraînement de l'autre brin de câble (10b).

9. Installation pour évacuer le fumier d'une étable selon l'une des revendications 1 à 8, **caractérisée en ce que** le dispositif de serrage est conçu comme un ressort de traction ou de pression.

10. Installation pour évacuer le fumier d'une étable selon l'une des revendications 1 à 9, **caractérisée en ce que** la surface du tambour d'entraînement (26) est revêtue de caoutchouc pour augmenter la protection antipatinage.

11. Installation pour évacuer le fumier d'une étable selon l'une des revendications 1 à 10, **caractérisée en ce que** le câble (10) se compose d'un matériau résistant à l'action corrosive du lisier.

12. Installation pour évacuer le fumier d'une étable selon l'une des revendications 1 à 11, **caractérisée en ce que** le câble (10) est revêtu d'un matériau résistant à l'action corrosive du lisier.
